# EUROPEAN PATENT SPECIFICATION

(11) **EP 3 902 740 B1**
(45) Date of publication and mention of the grant of the patent: **01.11.2023**
(21) Application number: 19839157.5
(22) Date of filing: 24.12.2019
(51) Int. Cl.: B62K 25/28

(54) **MOTORCYCLE WITH QUADRILATERAL REAR SUSPENSION**
MOTORRAD MIT VIERARMIGER HINTERRAD AUFHÄNGUNG
MOTOCYCLE AVEC SUSPENSION ARRIÈRE À QUATRE BRAS

(30) Priority: 28.12.2018 IT 201800021373
(43) Date of publication of application: 03.11.2021
(73) Proprietor: Piaggio & C. SpA, 56025 Pontedera (IT)
(72) Inventor: RAFFAELLI, Andrea, 56025 Pontedera (IT)
(74) Representative: Savi, Massimiliano
(86) International application number: PCT/IB2019/061327
(87) International publication number: WO 2020/136577

(56) References cited:
- US-A- 5 011 459
- US-A1- 2011 315 468

## Description

The present invention falls within the scope of manufacturing motorcycles and motor vehicles. The present invention particularly relates to a motorcycle comprising a rear wheel connected to the frame by means of a quadrilateral suspension with adjustable geometry.

### BACKGROUND ART

In any motorcycle, there may be identified a front part, formed by the frame of the motorcycle and by the front wheel, and a rear part, or rear axle, comprising the rear wheel. The rear wheel is typically connected to the frame by means of a rear suspension. There is also provided a mechanical transmission for transferring a motor torque to the rear wheel, the motor torque being generated by a motor installed on the frame. In a known embodiment, the suspension is referred to as *"quadrilateral"* because it comprises an assembly of components which, with the frame, configure a quadrilateral kinematic mechanism. The suspension may comprise one or more dampers typically connected to one of the components of the quadrilateral.

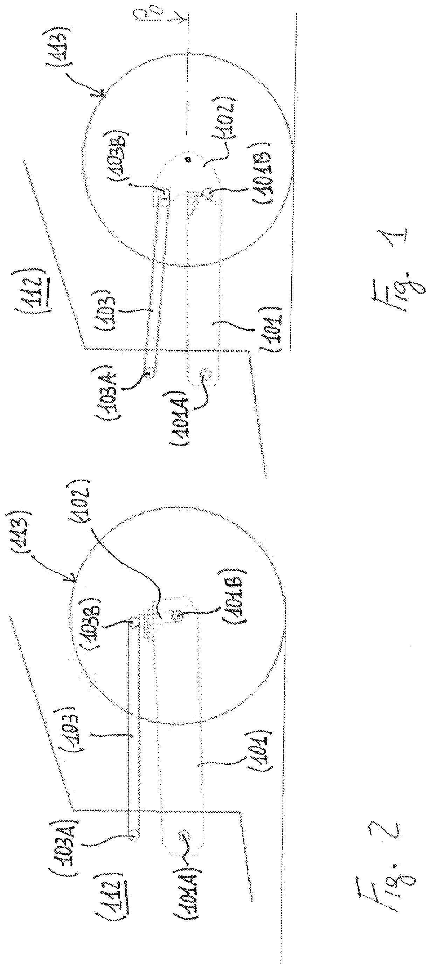

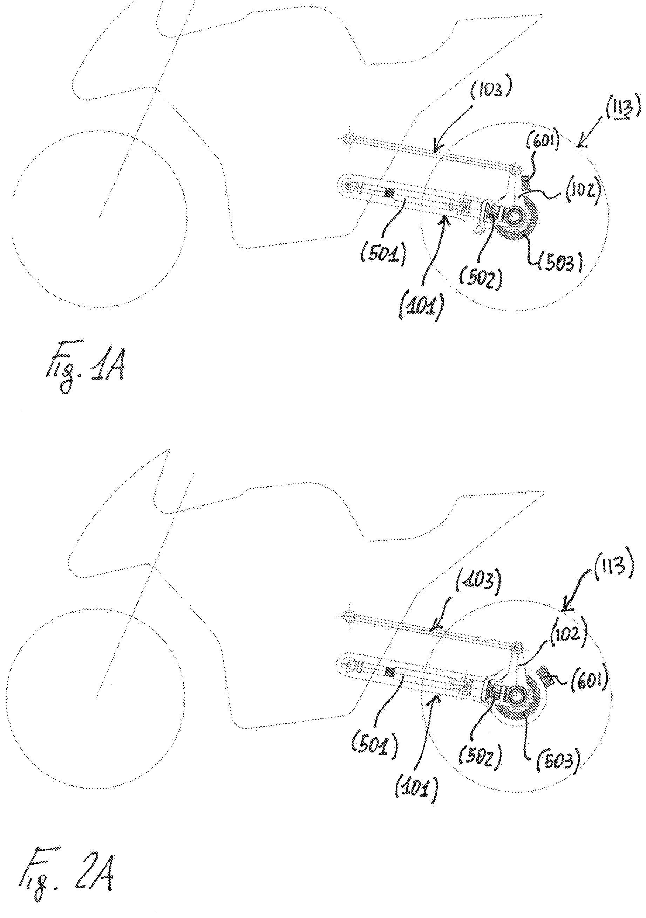

Figures 1 and 2 diagrammatically show two known quadrilateral suspensions. In the configuration in Figure 1, the suspension comprises a swingarm (101), also referred to as a *"lower crank",* a connecting rod (102) and a reaction rod (103), indicated also with the expression *"upper crank".* The connecting rod (102) is hinged to the axis (500) of the rear wheel (113) so as to keep a degree of freedom of rotation with respect to the wheel itself. The swingarm (101) and the reaction rod are hinged to the frame (112) by means of corresponding first connection axes (101A, 103A) and to different ends of the connecting rod (102) by means of corresponding second connection axes (101B, 103B). In particular, such ends are substantially opposite to a horizontal reference plane (Po) containing the axis of the rear wheel (113).

The suspension schematized in Figure 2 differs from that described, substantially in that the swingarm (101) is hinged to the connecting rod (102) by means of a connection axis (101B) which is coaxial to the axis of the rear wheel (113). In other words, the related rotation axis of the swingarm (101) with respect to the connecting rod (102) is substantially coaxial to the rotation axis of the rear wheel (113).

Other types of suspension exist, in which the reaction rod is positioned in a position below the swingarm, i.e. in a position below the reference plane Po containing the axis of the rear wheel (113).

With reference to Figures 1A and 2A, the mechanical transmission in the solutions indicated above is of the Cardan type, providing a Cardan joint (501) which drive component is actuated by the motor installed on the frame. Usually, the transmission is accommodated in the structure of the swingarm (101), which is conveniently structured for this purpose. The rotating motion is transferred from the Cardan joint to the rear wheel by means of an assembly of conical gears which includes a pinion (502) and a ring gear (503). The pinion (502) is directly actuated by the Cardan joint (501) and rotates by means of the use of supports connected to the connecting rod (102). The pinion (501) meshes with the ring gear (503) which is integral with the rear wheel (113). Both solutions described therefore provide separating the conical pair (pinion-gear) from the swingarm (101). The torque transmitted tends to rotate the connecting rod (102) about the rotation axis thereof (coinciding with that of the rear wheel), but such a rotation is prevented by the reaction rod (103).

It can also be concluded from the simple comparison between Figures 1A and 2A that the two solutions described differ in the different conformation assigned to the connecting rod (102). In the solution in Figure 1A, the swingarm (101) is hinged to an end of the connecting rod (102) and therefore the latter is typically also used for the installation of the brake caliper (601) which acts on the brake disk (not shown), which instead is integral with the rear wheel (113). Contrarily, in the solution in Figure 2A, the swingarm (101) is shaped so as to contain therein the connecting rod (102), thus allowing an oscillation thereof about the axis thereof. Here, the brake caliper (601) is typically mounted on the structure of the swingarm (101) because the installation on the connecting rod would be particularly complicated.

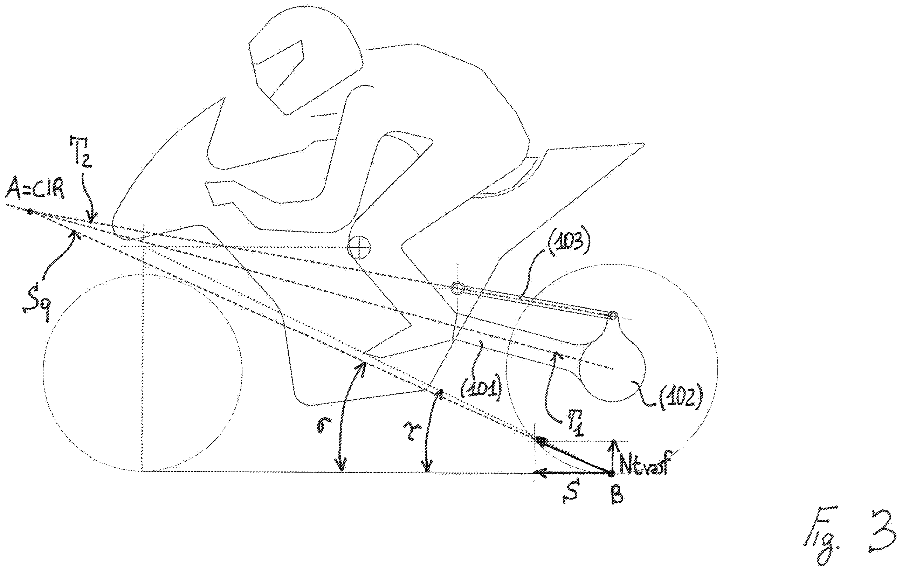

Figure 3 is a diagrammatic depiction indicating the forces which act on the wheel-suspension system during the variations in speed of the motorcycle. In particular, the suspension schematized in Figure 2 is referenced, but the following considerations certainly are valid also for the suspension in Figure 1. The force parallel to ground S (directed forward if the motor vehicle is accelerating due to the thrust of the motor, or back if instead the motor vehicle is decelerating due to the effect of the motor brake or of the rear caliper) and the load transfer force Ntrasf are identified, the load transfer force being orthogonal to the thrust force S, which is added to the load with the motor vehicle in gear at null acceleration and is directed upwards with the motor vehicle accelerating and downwards with the motor vehicle slowing down. The result of the two forces S and Ntrasf is inclined with respect to a horizontal direction, by an angle τ typically indicated as load transfer angle. Indicated as squat line (Sq) instead is the straight line which joins the contact point (indicated by B) of the rear wheel (113) with the ground (plane P1) with the intersecting point (indicated by A) between the extension direction of the swingarm (indicated by T1) and the extension direction of the reaction rod (indicated by T3). The angle between the squat line (Sq) and the horizontal direction is referred to as a squat angle σ.

In particular, the expression *"extension direction of the swingarm"* (T1) is identified with the direction intersecting the axes at which the swingarm (101) is hinged to the frame (112) and to the connecting rod (102), respectively. Similarly, the expression *"extension direction of the reaction rod"* (T3) means the direction intersecting the axes at which the reaction rod (103) is hinged to the frame (112) and to the connecting rod (102), respectively.

The ratio between the tangents of the two angles τ, σ defined above is indicated as squat ratio, indicated here with letter R. As is known, the value of the squat ratio affects the balance of the motorcycle. Considering a motorcycle which for example travels at a constant speed, three cases may exist. If the two angles are equal (R=1), the balance of the motorcycle remains substantially unvaried, since there are no momentums acting on the swingarm. If instead, the squat ratio is greater than 1 (R>1), then the rear suspension tends to become compressed, with subsequent lowering of the rear axle of the motorcycle. Contrarily, when the condition R<1 exists, then the rear suspension tends to extend, with subsequent raising of the rear axle of the motorcycle.

From above, it is apparent that the behavior of the suspension is therefore caused by the position which is taken on by point A (indicated in Figure 3) which is the center of instantaneous rotation (hereinafter indicated by CIR) of the connecting rod (102). The position of the CIR continuously varies according to the oscillations of the connecting rod (102) caused by the load conditions (acceleration, braking action) to which the motorcycle is subjected. In both configurations considered, such oscillations cause a displacement of the connection axes (101B), (103B) defined above, and therefore a variation of the orientation of the directions of extension of the swingarm (101) and of the reaction rod (103).

The place of the points which may be occupied by the CIR is usually indicated by the term roulette or movable pole. In design step, the extension of the movable pole is assessed, and therefore the possible behavior is provided of the suspension according to the loads. The movable pole is in any case invariable because it is established by the geometry of the quadrilateral and therefore also by the position in which the connection axes (101A, 103A) are positioned by means of which the swingarm and the reaction rod are hinged to the frame. Thus, a given geometry of the quadrilateral results in a given behavior of the suspension. Currently, in order to change the behavior of the suspension, i.e. to vary the balance of the motorcycle, the other elements of the suspension, i.e. the dampers, are acted on. In particular, the use of electronically-controlled dampers is provided, which are capable of modifying the extension thereof according to the significant loads on the suspension to raise or lower the suspended weights of the motor vehicle in a corresponding manner. Albeit effective in terms of results, the use of this type of dampers is however a highly critical factor in terms of costs. Certainly, this solution cannot be implemented on all motor vehicles.

With respect to these considerations, the need thus arises to provide a new solution which allows controlling the balance of the motorcycle without however acting on the structure of the damper, i.e. without resorting to using electronically-controlled dampers or systems having mechanical or hydraulic interconnection between the front and rear suspensions.

The document US 5,011,459 A shows a motorcycle with the features of the preamble of claim 1.

### SUMMARY

With respect to the considerations above, it is the main task of the present invention to provide a motorcycle which allows the above-indicated limits to be overcome or at least reduced. Within the scope of this task, it is a first object of the present invention to provide a motorcycle in which the balance of the motorcycle is adjustable without using electronically-controlled dampers. It is a further object to provide a motorcycle in which it is possible to adjust the behavior of the rear suspension according to a forecast of the variation of the load transfer direction weighing on the wheel. It is a further object of the present invention to provide a motorcycle with quadrilateral suspension which is reliable and easy to make at competitive costs.

The present invention is based on the general consideration of overcoming the technical problem and of achieving the objects indicated above by varying the geometry of the quadrilateral suspension, i.e. providing an adjustment of the position of at least one of the connection axes. The task and the objects indicated above are particularly achieved by a motorcycle comprising a frame and a rear wheel operatively connected to the frame by means of a rear suspension which includes a component assembly. Such a group configures, with the frame, a quadrilateral kinematic mechanism. In particular, the component assembly comprises:
- a swingarm hinged to the frame by means of a first connection axis;
- a reaction rod hinged to the frame by means of a second connection axis;
- a connecting rod rotatably connected to the axis of the rear wheel, in which said connecting rod also is rotatably connected to the swingarm by means of a third connection axis and to the reaction rod by means of a fourth connection axis.

The motorcycle according to the invention is characterized in that it comprises adjustment means adapted to adjust the position of at least one of said connection axes of said quadrilateral kinematic mechanism with respect to the other connection axes.

The variation of the position of at least one of the connection axes (obtained by means of said adjustment means) causes an alteration of the geometry of the quadrilateral and accordingly, a variation of the squat angle. The change in geometry induces a mutation in the behavior of the suspension in response to the loads, and therefore a different balance.

According to a first embodiment of the invention, the second connection axis maintains a fixed position with respect to the frame and the adjustment means are configured to vary the position of the first connection axis with respect to the second connection axis. In this embodiment, the variation of the geometry of the quadrilateral is obtained by modifying the orientation of the swingarm with respect to the frame.

According to a second embodiment of the invention, the first connection axis maintains a fixed position with respect is fixed and in which said adjustment means are configured to vary the position of the second connection axis with respect to the first connection axis. Here, the control of the geometry of the quadrilateral is carried out by acting on the orientation of the reaction rod.

According to a third embodiment of the invention, the motorcycle comprises first adjustment means configured to vary the position of the first connection axis and second adjustment means for varying the position of the second connection axis. According to an embodiment thereof, which applies to all the above-indicated embodiments of the invention, the adjustment means comprise an actuator with a fixed part connected to the frame and a movable part directly or indirectly connected to a corresponding connection axis. The fixed part and the movable part are configured so as to cause a displacement of the corresponding connection axis along a predetermined path.

The fixed part and the movable part are preferably connected to the frame and to said corresponding connection axis, respectively, so as to cause a displacement thereof along a rectilinear path. Again preferably, the actuator is selected from: a hydraulic actuator, an electric actuator, a pneumatic actuator.

According to a further embodiment, it also applying to all the above-indicated embodiments of the invention, the adjustment means comprise at least one guide element for guiding a corresponding connection axis along a predetermined path, and at least one thrust element, which directly or indirectly exerts a force on said corresponding connection axis so as to induce the displacement along said predetermined path.

Preferably, the guide element is rotatable and hinged to the frame so as to rotate about a rotation axis; said corresponding connection axis is rotatably connected to the guide element in an eccentric position with respect to that of said rotation axis. The thrust element is also connected to the guide element in an eccentric position with respect to said rotation axis, a position which however is different from that at which said corresponding connection axis is connected.

Preferably, said thrust element is an actuator selected from: an electric actuator, a hydraulic actuator or a pneumatic actuator. Alternatively, the thrust element is a spring comprising a first end hinged to the frame and a second end hinged to said guide element.

### LIST OF THE DRAWINGS

Further features and advantages of the invention shall be more apparent from an examination of the following detailed description of some preferred, but not exclusive, embodiments of the motorcycle, shown by way of non-limiting example, with the support of the accompanying drawings, in which:
- Figures 1 and 2 are diagrams of suspensions of known type;
- Figure 1A is a suspension of known type, according to the diagram in Figure 1;
- Figure 2A is a suspension of known type, according to the diagram in Figure 2;
- Figure 3 is a diagram related to the forces which act on a quadrilateral rear suspension of a motorcycle of known type;
- Figures 4 and 5 are the views related to a first embodiment and a second embodiment, respectively, of adjustment means of a motorcycle according to a first embodiment of the invention;
- Figures 4A and 4B are views related to the operation of the adjustment means in Figure 4;
- Figures 6 and 7 are the views related to a first embodiment and a second embodiment, respectively, of adjustment means of a motorcycle according to a second embodiment of the invention;
- Figures 8 to 12 are views related to variants of the motorcycle according to the present invention.

### DETAILED DESCRIPTION

With reference to the mentioned drawings, the present invention relates to a motorcycle 1 comprising a frame 12, a front wheel 11 and a rear wheel 13. Motorcycle 1 also comprises a motor (not shown) and a drive unit for transferring the motor torque generated by the motor, to the rear wheel. In this regard, the drive unit may be of the Cardan type, technical solutions which in themselves are known within the scope of manufacturing motorcycles.

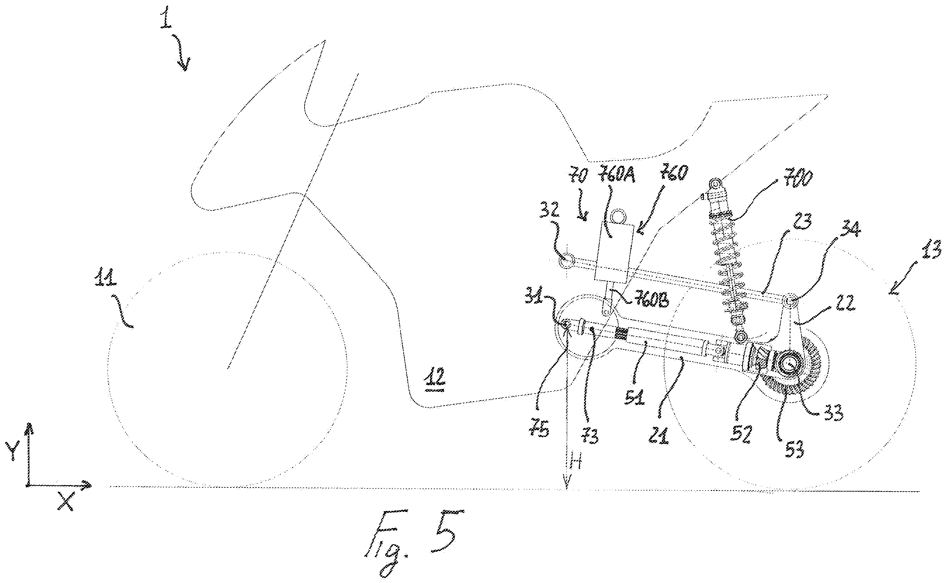

The rear wheel 13 is connected to frame 12 by means of a suspension comprising a damper 700 (shown only in Figure 5) and a component assembly which configure a quadrilateral kinematic mechanism. Preferably, but not exclusively, the quadrilateral has one of the configurations attributable to the diagrams in the above-described Figures 1 and 2. In any case, the kinematic mechanism according to the invention comprises:
- a first component 21 or swingarm 21 (hereinafter also indicated by the expression first crank 21) hinged to frame 12 by means of a first connection axis 31;
- a second component 23 or reaction rod 23 (hereinafter also indicated by the expression second crank 23) hinged to frame 12 by means of a second connection axis 32 which is different from said first connection axis 31;
- a third component 22 (or connecting rod 22) rotatably connected to the axis of the rear wheel 13 and connected to the first component 21 by means of a third connection axis 33 and connected to said second component 23 by means of a fourth connection axis 34 which is different from said third connection axis 33.

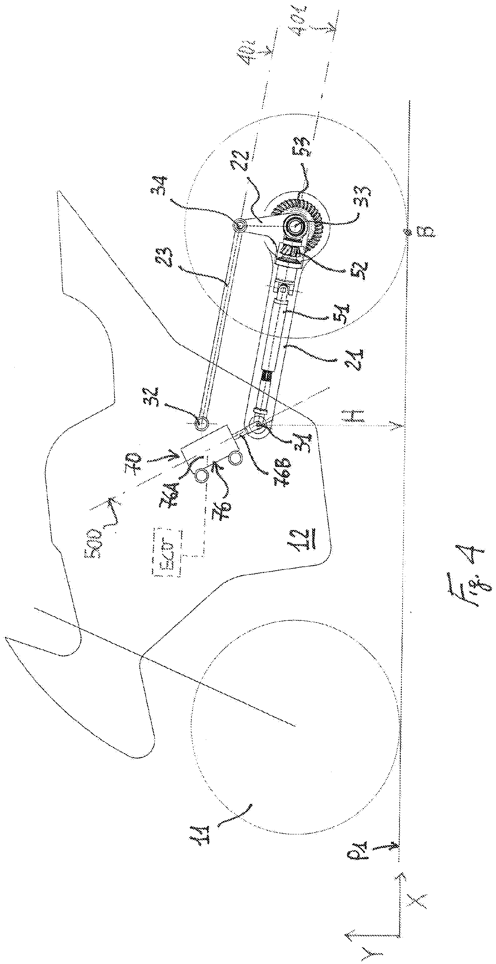

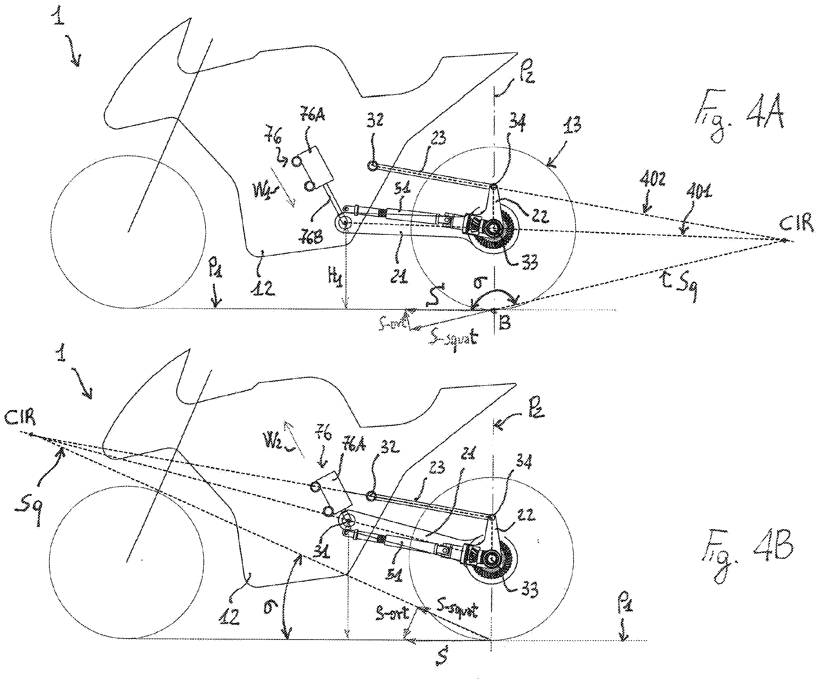

The position (assessed on the plane identified by the axes X-Y indicated in Figure 4) in which the above-defined connection axes 31, 32, 33, 34 are positioned identifies the geometry of the quadrilateral. For the purposes of the present invention, the expression *"connection axis"* means generally indicating an element, for example in the form of pin or bearing, which defines a rotation axis of one of said components 21, 22, 23 of the quadrilateral with respect to one other one of said components, or of one of said components 21, 22, 23 with respect to frame 12. Said rotation axes related to said connection axes 31, 32, 33, 34 are parallel, or substantially parallel, to one another.

The motorcycle according to the invention comprises adjustment means 70, 80, 180 configured to vary the position of one of said connection axes 31, 32, 33, 34 with respect to the other connection axes.

In particular, the quadrilateral kinematic mechanism comprises:
- swingarm 21 which extends between a first connection axis 31, at said frame 12 and/or said motor 100, and a wheel axis 33, at said rear wheel 13;
- the reaction rod 23 hinged to frame 12 by means of a second connection axis 32;
- a connecting rod 22 rotatably connected to the axis of the rear wheel 13 and rotatably connected to swingarm 21 by means of a third connection axis 33 and to the reaction rod 23 by means of a fourth connection axis 34,
- in which the center of instantaneous rotation CIR of the connecting rod is defined by the intersection of a first geometrical line passing through the first connection axis 31 and the wheel axis 33, and by a second geometrical line representing the extension of the reaction rod 23.

The adjustment means 70, 80 are adapted to adjust the position of at least one of said connection axes 31, 32, 33, 34 of the quadrilateral kinematic mechanism with respect to the other connection axes 31, 32, 33, 34, in feedback to a compression variation of the suspension, such that the related adjustment of position of the connection axes varies the position of the center of instantaneous rotation (CIR) so as to therefore vary the balance of motorcycle 1.

In essence, the adjustment means 70, 80 are adapted to vary the geometry of the quadrilateral and therefore cause a corresponding variation of the position of the center of instantaneous rotation (CIR) of the connecting rod 22. Such a variation in position is assessed in a condition of stationary motor vehicle or motor vehicle moving at constant speed. The adjustment means 70, 80 allow varying the orientation of the squat line and therefore setting a different movable pole along which the CIR of the connecting rod moves. Ultimately, a different behavior of the suspension and therefore a different balance of the motorcycle, is set.

According to a first embodiment of the invention shown in Figure 4, the adjustment means 70 are configured to vary the position of the first connection axis 31 by means of which swingarm 21 is rotatably connected (hinged) to frame 12. In particular, the position of the first connection axis 31 is varied with respect to the second connection axis 32 which keeps a fixed position with respect to frame 12. In other words, in this first embodiment, the variation of the CIR (i.e. of the geometry of the quadrilateral) is obtained by varying the orientation of the extension direction of swingarm 21 (indicated by numeral 401) defined as the straight line which intersects the rotation axes defined by the first connection pin 31 and by the third connection pin 33.

The suspension in Figure 4 has a configuration which is attributable to that in Figure 2A in which swingarm 21 is connected to the connecting rod 22 by means of a connection axis 33 which is coaxial to the rotation axis of the rear wheel 13. In particular, the connecting rod 22 is at least partially accommodated in swingarm 11 so as to maintain the possibility of oscillating about the rotation axis of the rear wheel 13. The transmission of the motion is of the Cardan type, corresponding to that shown in Figure 2A. Thus, a Cardan joint 51 is identified, accommodated in the inner structure of swingarm 21 and actuated by a motor (not shown) which is integral with frame 12 of the motor vehicle. Moreover, a pinion 52 is identified, supported by the connecting rod 22 by means of suitable supports. In particular, the pinion maintains a degree of freedom of rotation with respect to the connecting rod 22 and oscillates with the connecting rod itself about the rotation axis of the latter (axis of the rear wheel 13). Pinion 52 meshes with the ring gear 53 which is integral with the rear wheel 13 so as to induce the rotation thereof.

Within the scope of this first embodiment, the adjustment means 70 comprise an actuator 76 which may be of the electric type or alternatively of the hydraulic type, comprising a fixed part 76A connected to frame 12 and a movable part 76B (or rod 76B) directly or indirectly connected to the first connection axis 31 by means of another element. In particular, the connection is configured so that a movement of the rod (extending or returning in the fixed part) causes a corresponding displacement of the first connection axis 31 along the rectilinear path identified by the longitudinal direction of rod 76B (direction indicated by 500 in Figure 4). Such a displacement translates into a variation of the orientation of the first reference direction 401 defined above.

The fixed part 76A is therefore rigidly connected to frame 12. This rigid connection ensures the first connection axis 31 moves along said rectilinear path. In order to allow the displacement of the first connection pin 31, frame 12 may comprise a rectilinear guide (not shown) in which the first connection axis 31 may be positioned in the position caused by rod 3B. Such a rectilinear guide extends along a direction which is aligned with the longitudinal direction 500 of rod 76B. The preparation of a rectilinear guide advantageously allows the flexural loads to which rod 76B is subjected to be reduced, and therefore the performance required of the rod itself to be reduced.

With respect to the rigid connection of the fixed part 76A of actuator 76 to frame 12, the displacement of the first connection axis 31 causes an oscillation of the connecting rod 22 about the connection axis 33 and a displacement of the fourth connection axis 34 between the reaction rod 23 and the connecting rod 22. Thus, if on the one hand the displacement of the first connection axis 31 directly causes the variation of the orientation of the first reference direction 401, on the other it also causes a variation of the orientation of the second reference direction 402. By restraining the fixed part 76A of actuator 76 to the frame in general, the displacement of the first connection axis 31 causes a disturbance over the whole quadrilateral.

In an alternative embodiment, actuator 76 could be hinged to frame 12, therefore maintaining a degree of freedom of rotation. Here, the connection axis 31 is no longer constrained to move along a rectilinear path, but rather could move along a circumference which is concentric to the rotation axis of the connecting rod 22. Here therefore, the displacement of the first connection axis 31 could be actuated without varying the orientation of the other components of the quadrilateral.

Actuator 76 is operatively connected to a control unit ECU (indicated by the dotted line in Figure 4) which allows the actuation thereof. In particular, the control of actuator 76 may be directly actuated by the motorcyclist or in completely automatic manner by the ECU according to the movement conditions of the motorcycle, in particular in feedback to the stroke or compression variation of the rear suspension.

Thereby, by adjusting the quadrilateral kinematic mechanism, the balance of the vehicle may be controlled by taking advantage of the compression of the rear suspension as input signal. In other words, it allows the balance of the motorcycle to be controlled according to the movement of the suspension by adapting the center of instantaneous rotation each time.

For example, it could be desirable to minimize the variations of balance to promote traction.

When accelerating, two forces act on the vehicle, which tend to vary the balance:
- the force of inertia associated with the acceleration applied in the center of gravity: it causes a load transfer which unloads the forecarriage and loads the rear axle, therefore the rear suspension tends to be shortened due to the effect of the greater "weight" it suffers from.

The force of traction which is applied to the contact point of the rear drive wheel: by breaking it up into two orthogonal components, the component which points toward the center of instantaneous rotation CIR is identified, which is the one which pushes the vehicle forward, and the orthogonal one is identified, which instead - according to where the center of instantaneous rotation is located - tends to rotate the oscillating part of the rear suspension, i.e. the connecting rod element, so as to extend or compress the damper.

If the two effects are of equal entity, the vehicle advances without pitching.

However, it is to be understood that such an adjustment which allows reducing the variations of the suspension, is not the ideal one for the driver. The variation of the adjustment of the quadrilateral kinematic mechanism in general allows the balance of the motor vehicle to be controlled.

To intervene on such a balance of forces, given the acceleration value that the driver decides to have, the position of the center of gravity of the suspended weight (the driver may stand up more or less in the saddle) may be acted on, or the suspensions may be forced to vary their position (stationary with adjustments or driving in the case of electronic suspensions) or again, according to the present invention, the quadrilateral which identifies the center of instantaneous rotation of the rear wheel (connecting rod of the quadrilateral) may be acted on.

For example, the motorcyclist may decide to set the position of the first connection axis 31 according to a given stretch of road to be travelled. According to a possible variant, the control unit ECU may be set so as to actuate a continuous adjustment of the squat angle σ, for example according to the signals sent to the same by suitable sensors (e.g. gyroscopes) capable of detecting, in addition to the acceleration, also the tilting angle of the motor vehicle. In other words, by processing the signal of such sensors, the ECU may calculate the load transfer direction (that is forecast angle τ) and control or not control actuator 76 to displace the first connection pin 31 so as to keep the desired value of the squat ratio.

In one setting modality, the control unit ECU could forecast a variation of the load transfer direction along the road to be travelled according to the features thereof (corners, straight stretches, uphill or downhill stretches). The road could be set in this modality by the motorcyclist by means of a navigation system.

With reference again to Figure 4, in addition to the first reference direction 401 (extension direction of swingarm 21) defined above, the second reference direction 402 (extension direction of the reaction rod 402) is also identified, which intersects the rotation axes defined by the second connection axis 32 and by the fourth connection axis 34. Again in Figure 4, B indicates the contact point of the rear wheel 13 with the ground (plane P1), while H indicates the height of the first connection axis 31 with respect to the support plane P1 of the motorcycle. It is worth noting that the expression *"orientation"* of a reference direction (401, 402) means the angle formed by such a direction with the support plane P1.

It is worth noting that in the configuration in Figure 4, the two reference directions 401, 402 are parallel, whereby the CIR of the connecting rod 22 in essence is positioned in an infinite point. This configuration with parallel directions of the cranks 21, 23 could be a reference (or initial) configuration, that is a starting configuration for making the adjustment. It is worth noting that in this configuration, a squat angle may be set which is closer to the load transfer angle with the suspension in operating configuration.

Figures 4A and 4B allow the operation of the adjustment means schematized in Figure 4, to be understood. The adjustment means 70 therefore allow the squat ratio to be modified by acting on swingarm 21, more specifically by varying the orientation of the first reference direction 401. With reference to Figure 4A, an actuation of actuator 76 in the direction of an extension of the rod (see arrow W1) causes a decrease of the height (H1<H) of the pinion with respect to the support plane P1. This translates into a different CIR of the connecting rod 22 with respect to the CIR (infinite point) in the initial reference condition. The result is a different squat angle σ from that in the condition in Figure 4.

With reference to Figure 4B, upon an actuation of actuator 76 in the direction of a return of the rod (see arrow W2), the first connection axis 31 moves away from the support plane P1 (H2>H). This translates into a new position of the CIR with respect to that which may be identified in Figures 4 and 4A.

In this regard, from the comparison between Figures 4A and 4B, it is worth noting how the CIR occupies a position to the right or to the left of a vertical reference plane P2 passing through the axis of the wheel, according to how actuator 76 is actuated. Considering the thrust step (acceleration of the motorcycle) for example, the loads weighing on the suspension, and therefore the adherence of the rear wheel to the ground, vary according to the position occupied by the CIR. If as shown in Figure 4B, the CIR is positioned in an advanced position towards the front wheel (front axle) (that is in a position to the left of the reference plane P2), then the thrust force tends to extend the suspension and this causes a lesser adherence of the rear wheel 13 to the ground. Contrarily, the adherence of the rear wheel 13 increases when the CIR takes on a retracted position (that is to the right of the reference plane P2) because the thrust force tends to compress and flatten the rear suspension.

In order to better understand the behavior in a different manner according to the position of the CIR, the external horizontal force S in Figures 4A and 4B which acts on the point on the ground of tire B was broken down into two components: the first (indicated by S-squat) is the component along the squat direction (indicated by Sq), while the second (indicated by S-ort) is the component along a direction orthogonal to the squat direction (Sq). In essence, the component along direction Sq is directed towards the CIR and therefore contributes to advancing or slowing down the motor vehicle. Component S-ort generates a momentum (with respect to the CIR) and therefore tends to cause the suspension to rotate.

In the condition in Figure 4A (CIR in retracted position and obtuse squat angle), the force component S-squat is directed in the direction opposite to the CIR and therefore causes a compression of the reaction rod 23 and of swingarm 21. Simultaneously, also component S-ort creates a momentum which tends to close the rear suspension. Overall in the condition in Figure 4A, the two force components S-squat and S-ort act so as to weigh down the rear axle, therefore increasing the adherence of the rear wheel 13 to the ground.

Contrarily, in the condition in Figure 4B (CIR in advanced position), the force component S-squat is directed towards the CIR and therefore tends to extend the reaction rod 23 and swingarm 21. Here, component S-ort generates a momentum which tends to open the suspension. Here, the two force components S-squat and S-ort cause a lightening of the loads weighing on the rear axle, and therefore a decrease of the adherence of the rear wheel 13 to the ground.

Also with reference to Figures 4, 4A, 4B, the CIR is assessed in a condition of the motorcycle being stationary or moving at a constant speed, that is in the absence of oscillations of the connecting rod due to the acceleration or braking of the motorcycle.

Again with reference to Figures 4A, 4B, it is worth noting how the Cardan joint 51 keeps the orientation thereof unaltered as the position of the first connection axis 31 varies (caused by the action of actuator 76 in one direction or in the other - directions W1 and W2), and therefore as the angle of the extension direction 401 of swingarm 21 varies with respect to the support plane P1. In other words, swingarm 21 moves with respect to the Cardan joint 51 by means of actuator 76, which position of the Cardan joint on the frame is caused by the element connected to the motor, which puts the joint itself into rotation.

Within the scope of the first embodiment indicated above (adjustment of the position of the first connection axis 31), in a possible embodiment thereof, the adjustment means 70 comprise a guide element 75 for guiding the first connection axis 31 along a predetermined path, and at least one thrust element 760, which directly or indirectly acts on the first connection axis 31 so as to induce the guided displacement thereof along the guide element 75. The term *"indirectly"* means a condition for which the thrust element 760 in any case causes the displacement of the first connection axis 31 also if it is not connected thereto.

With reference again to Figure 4, it is worth noting how also actuator 76 as a whole configures a guide element and a thrust element. In particular, the guide element may be identified in the fixed part 76A rigidly restrained to frame 12, and in particular by the cylindrical chamber which guides the movement of the piston-rod assembly. The thrust element may instead be identified by the piston-rod assembly which causes the displacement of the first connection axis 31.

In the solution shown in Figure 5, there is, as guide element 75, a body hinged to frame 12 so as to rotate about a rotation axis 73 thereof. Swingarm 21 is hinged to the guide element 75 by means of the first connection axis 31 in an eccentric position with respect to the rotation axis 73. Also the thrust element 760 is connected to the guide element 75 in eccentric position with respect to the rotation axis 73. This latter position is different from that in which the first connection axis 31 is positioned.

Upon the actuation thereof, the thrust element 760 causes a rotation of the guide element 75 and a subsequent displacement of the first connection axis 31 along a circular trajectory which is concentric to the rotation axis 73 of the guide element 75. The direction of such a displacement (clockwise or anticlockwise) depends on the direction of the force exerted by the thrust element 760. According to the principle disclosed above, the displacement of the first connection axis 31 translates into a variation at least of the first reference direction 401 with respect to frame 12 and therefore, into a variation of the squat angle σ.

In particular, if the thrust element 760 causes a clockwise rotation of the guide element 75, the first connection axis 31 moves to a higher height than height H indicated in Figure 5. Contrarily, if the thrust element 760 rotates the guide element 75 in anticlockwise direction, then the first connection axis 31 moves towards the support plane at a lower height than that (H) indicated in Figure 5. Thus, the first connection axis 31 moves away from or close to the support plane P1 according to the direction of rotation of the guide element 35 the CIR. Therefore, the same considerations made in the comments on Figures 4A and 4B above, are valid.

In the embodiment schematized in Figure 5, the thrust element 760 consists of an actuator which comprises a fixed part 760A rotatably connected to frame 12, and a movable part 760B connected to the adjustment element 75 in eccentric position with respect to the rotation axis 73. The actuator may be of electric type or of hydraulic type and may be directly actuated by the motorcyclist by means of the control unit ECU to which the actuator is connected. In general, the actuator used as thrust element 760 may be actuated by the motorcyclist or automatically by the control unit ECU similarly to the above provision for actuator 76 with reference to the above-described embodiment in the comments on Figure 4.

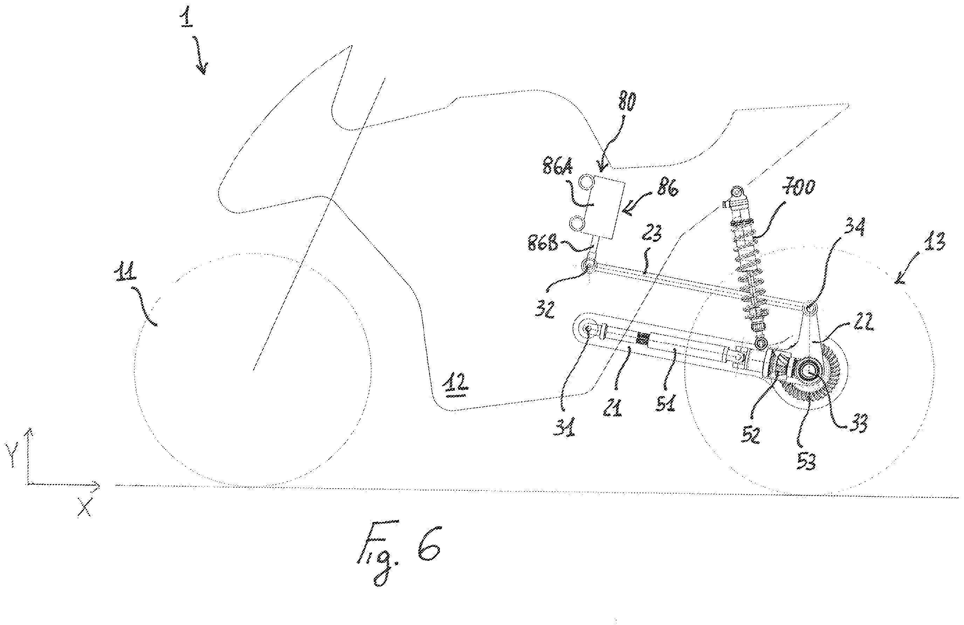

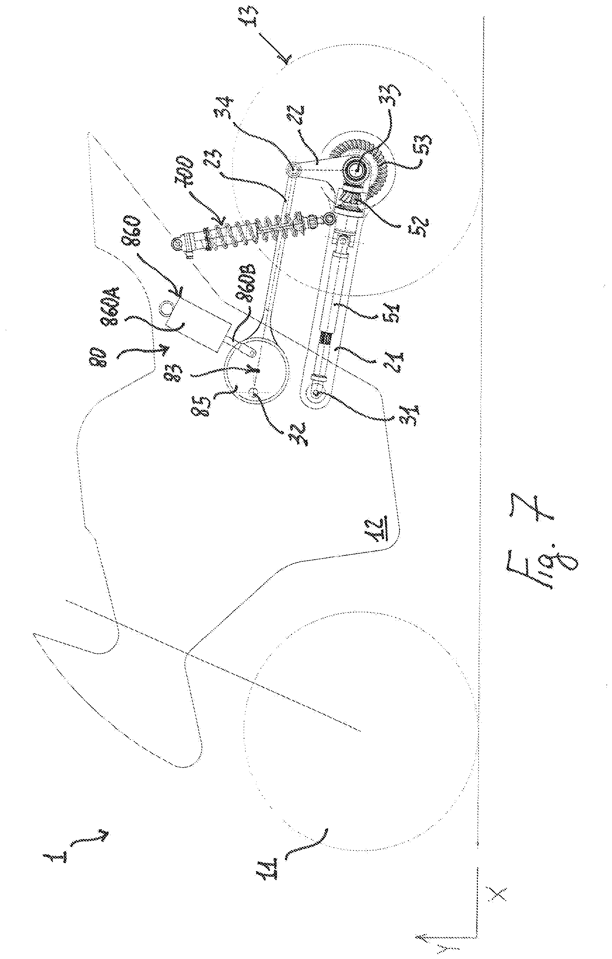

According to a second embodiment of the invention shown in Figures 6 and 7, the adjustment means 80 instead are configured to vary the position of the second connection axis 32 by means of which the reaction rod 23 is rotatably connected (hinged) to frame 12. In particular, the position of the second connection axis 32 is varied with respect to the first connection axis 31 which here maintains a fixed position with respect to frame 12. In other words, in this second embodiment, the variation of the CIR is obtained by varying the orientation of the second reference direction 402 (extension direction of the reaction rod 23) defined above.

Within the scope of this second embodiment (adjusting the position of the second connection axis 32), the adjustment means 80 may be configured in similar manner to those usable for adjusting the position of the first connection axis 31, i.e. in the embodiments described in the comments on Figures 4 and 5.

Therefore, with reference to Figure 6, in a first embodiment thereof, the adjustment means 80 may comprise an actuator 86 comprising a fixed part 86A connected to frame 12, and a movable part 86B (or rod 86B) directly or indirectly connected by means of another element, to the second connection axis 32. Concerning the possible methods for actuating actuator 86 (by the motorcyclist or in automatic manner by the ECU alone), the same considerations made above for actuator 75 provided in the first embodiment of the invention, are valid. Similar considerations to those made above in the comments on Figures 4A and 4B may be made also in terms of technical effect (displacement of the CIR).

With reference to Figure 7, in a variant thereof, the adjustment means 80 for adjusting the position of the second connection axis 32 may be configured in similar manner to those described above in the comments on Figure 5. Thus, the adjustment means 80 comprise a guide element 85 hinged to frame 12 so as to rotate about a rotation axis 83 thereof. The reaction rod 23 is hinged, by means of the second connection axis 32, to such a guide element 85 in a position which is eccentric with respect to the rotation axis 83. The adjustment means 80 also comprise a thrust element 860 installed on frame 12 and connected to the guide element 85 in eccentric position with respect to the rotation axis 83 and different from that in which the second connection axis 32 is positioned.

The same considerations, *mutatis mutandis,* indicated above in the comments on Figure 5 are valid for this embodiment. Practically, the adjustment means 80 in Figure 7 serve a similar function, are structured according to the same principle and generate a similar result to the adjustment means 70 described in the embodiment in Figure 5.

The adjustment means 70 described with reference to the first embodiment (adjustment of position of first connection axis 31) and the adjustment means 80 with reference to the second embodiment (adjustment of position of second connection axis 32) may be used with the same purpose also in a quadrilateral suspension having different configuration from that shown in Figures 4 to 7.

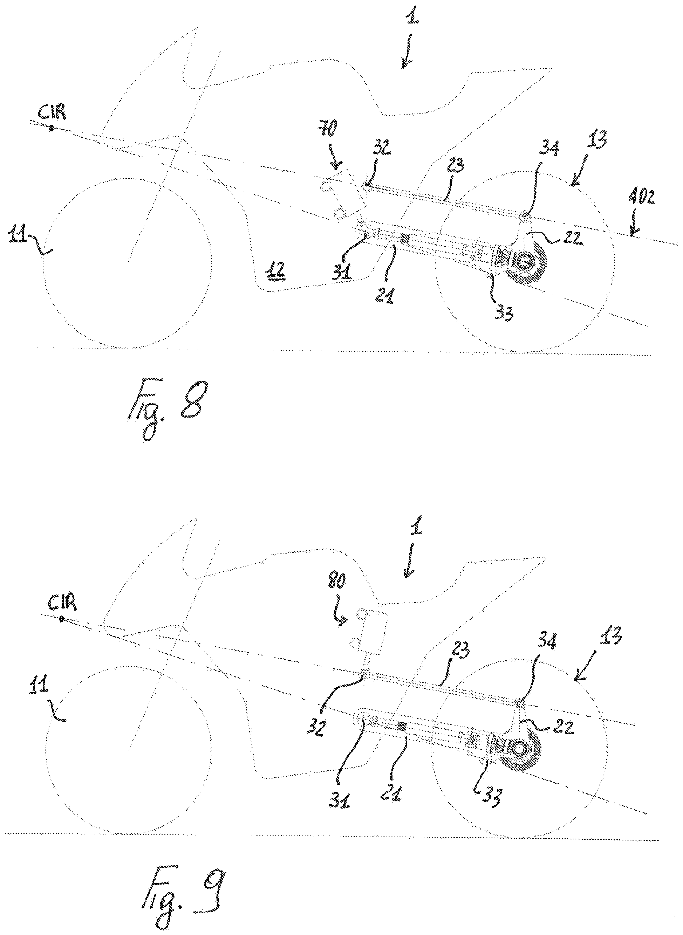

In this regard, Figures 8 and 9 show a suspension which attributable configuration is apparently attributable to the schematization in Figure 1. In particular, the swingarm 21 and the reaction rod 23 are connected to different ends of the connecting rod 22, while it is integral in translation with the rear wheel 13, but rotatable about a rotation axis 2 of the wheel itself. The transmission of the motion is of the Cardan type and substantially corresponds to that shown in Figures 4 to 7 (Cardan joint 51, pinion 52 and ring 53). Again with reference to Figures 8 and 9, the brake caliper (not shown) may be installed on the connecting rod 22, the brake caliper acting on the brake disk (not shown) which is integral with the wheel. Figures 8 and 9 also identify the two reference directions 401, 402, which here are not parallel to the position occupied by the third connection axis 33 and by the fourth connection axis 34.

As shown in Figures 8 and 9, also for a suspension configured according to the diagram in Figure 1, the adjustment of the position of the first connection pin 31 may be made using the same adjustment means 70 described above in the comments on Figure 4, and the adjustment of the position of the second connection pin 32 may be actuated by means of the same adjustment means 80 described in the comments on Figure 6.

Again considering a suspension configured according to the diagram in Figure 1, the possibility falls within the scope of the present invention, of adjusting the position of the first connection axis 31 by means of the adjustment means 70 shown in the embodiment in Figure 6, as does the possibility of adjusting the position of the second connection axis 32 by means of the adjustment means 80 in the embodiment in Figure 7.

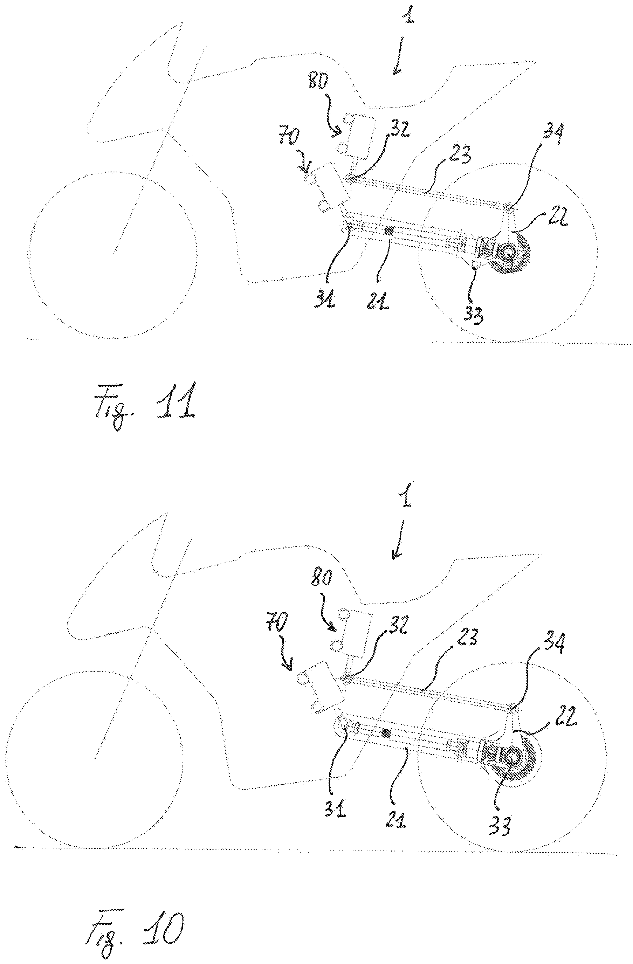

According to a possible embodiment shown in Figures 10 and 11, motorcycle 1 comprises first adjustment means 70 for varying the position of the first connection axis 31 and second adjustment means 80 for varying the position of the second connection axis 32. In essence, the possibility of varying the squat angle by acting on the position of both the connection axes 31, 32 falls within the present invention.

The suspension shown in Figure 10 and that shown in Figure 11 are attributable to that schematized in Figure 2 and that schematized in Figure 1, respectively. Therefore, the possibility is provided for both the configurations, of adjusting the position of the first connection axis 31 by means of the adjustment means 70 described above in the comments on Figure 4, and of adjusting the position of the second connection axis 32 by means of the solution described in the comments on Figure 6.

In the aforesaid embodiment, the third connection axis 33 coincides with the axis of the rear wheel 13.

Within the scope of this third possible embodiment of the invention (regulating the position of two connection axes 31, 32), the adjustment means described in the comments on Figure 5 may in any case be used to adjust the position of the first connection axis 31, just like the adjustment means described in the comments on Figure 7 may in any case be used to adjust the position of the second connection axis 32.

According to a possible embodiment, a spring could be used as thrust element in the embodiments shown in Figures 5 and 7, the spring being connected with one end to the frame and with the other end to the guide element in a position which is eccentric with respect to the rotation axis thereof, but different from that in which the corresponding connection axis is connected.

In this embodiment, in particular, the spring would operate to counter the spring of the damper, thus causing a displacement of the connection axis according to the behavior of the damper. Overall, such a spring would cause a lowering or raising of the position of the first connection pin so as to keep the neutrality of the assembly without any aid from electronic controls, which instead are required when the actuator is used.

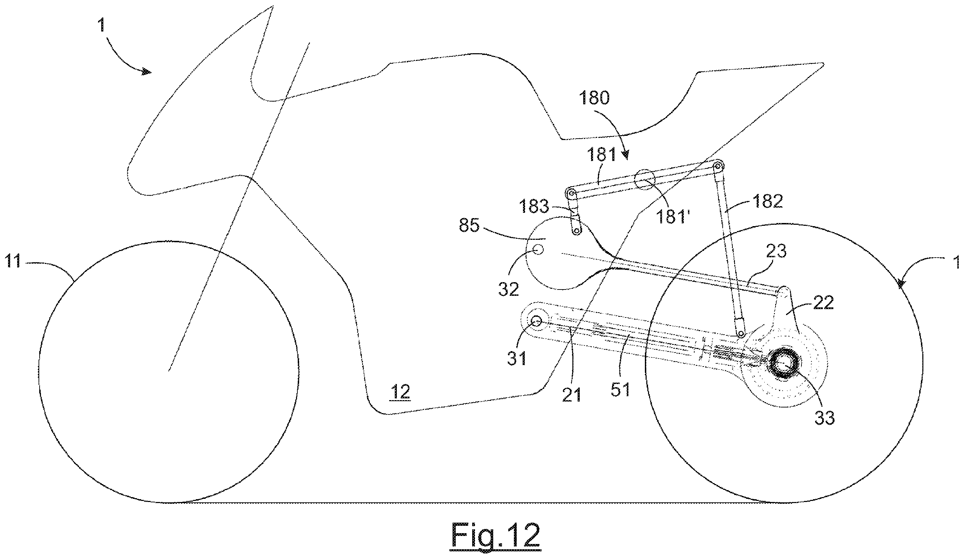

Figure 12 shows a construction variant of the adjustment means 180, which comprise a mechanical adjustment unit 180 connected to the suspension so that upon a stress due to the variation of the compression of the suspension, the mechanical adjustment unit 180 accordingly varies the related position of at least one of the connection axes to modify the center of instantaneous rotation (CIR).

In particular, the mechanical adjustment unit 180 is a linkage consisting of a first rod 181 pivotally connected to a portion of the frame about a rotation axis 181', a second rod 182 pivotally connected to the first rod 181 at a first end and to a portion of swingarm 21, and a third rod 183 pivotally connected to the first rod 181 at a second end, opposite to the first end, and to a guide element 85 which comprises axis 32. Thereby, when the suspension is compressed, the rear wheel 13 moves upward. The linkage 181, 182 and 183 transmits this jolting movement to the guide element 85 which therefore moves axis 32, thus modifying the center of instantaneous rotation defined as described above.

## Claims

1. A motorcycle (1) comprising:
a frame (12) which supports a motor (100);
a rear wheel (13) operatively connected to said frame (12) by means of a suspension configuring, with said frame (12), a quadrilateral kinematic mechanism, wherein said quadrilateral kinematic mechanism comprises:
a swingarm (21) which extends between a first connection axis (31), at said frame (12) and/or said motor (100), and a third connection axis (33) at said rear wheel (13);
a reaction rod (23) hinged to said frame (12) by means of a second connection axis (32);
a connecting rod (22) which supports a wheel axis, wherein said connecting rod (22) is rotatably connected to said third connection axis (33) of said swingarm (14) and to said reaction rod (23) by means of a fourth connection axis (34), wherein a center of instantaneous rotation (CIR) of said connecting rod (22) is defined by the intersection of a first geometrical line passing through said first connection axis (31) and said third connection axis (33), and by a second geometrical line representing the extension of said reaction rod (23),
adjustment means (70, 80, 180) adapted to adjust the position of at least one of said connection axes (31, 32, 33, 34) of said quadrilateral kinematic mechanism with respect to the other connection axes (31, 32, 33, 34), in feedback to a compression variation of said suspension, such that said adjustment of related position of said connection axes varies the position of said center of instantaneous rotation (CIR) so as to therefore vary the balance of said motorcycle (1), **characterized in that** said adjustment means comprise an actuator (76, 86) connected to a control unit (ECU) of said motorcycle, said control unit (ECU) being configured to receive an input signal of the variation of the compression of said suspension, and said actuator (76, 86) being configured to adjust the related position of at least one of said connection axes (31, 32, 33, 34) to modify said center of instantaneous rotation (CIR).

2. A motorcycle (1) according to claim 1, wherein said second connection axis (32) keeps a fixed position with respect to said frame (12) and wherein adjustment means (70) are configured to vary the position of said first connection axis (31) with respect to said second connection axis (32).

3. A motorcycle (1) according to claim 1, wherein said first connection axis (31) keeps a fixed position with respect to said frame (12) and wherein said adjustment means (80) are configured to vary the position of said second connection axis (32) with respect to said first connection axis (31).

4. A motorcycle (1) according to claim 1, **characterized in that** it comprises first adjustment means (70) configured to vary the position of said first connection axis (31) and second adjustment means (80) to vary the position of said second connection axis (32).

5. A motorcycle (1) according to any one of the claims from 1 to 4, wherein said adjustment means (70, 80) comprise an actuator (76, 86) comprising a fixed part (76A, 86A) connected to said frame (12) and a movable part (76B, 86B) directly or indirectly connected to a corresponding connection axis (31, 32), wherein said fixed part (76A, 86A) and said movable part (76B, 86B) are configured so as to cause a displacement of said corresponding connection axis (31, 32) along a predetermined path.

6. A motorcycle (1) according to claim 5, wherein said fixed part (76A, 86A) and said movable part (76B, 86B) are connected to said frame (12) and to said corresponding connection axis (31, 32), respectively, so as to cause a displacement thereof along a rectilinear path.

7. A motorcycle (1) according to claim 5 or 6, wherein said actuator (50) is selected from: a hydraulic actuator, an electric actuator, a pneumatic actuator.

8. A motorcycle (1) according to any one of the claims from 1 to 6, wherein said adjustment means (70, 80) comprise at least one guide element (75, 85) for guiding a corresponding connection axis (31, 32) along a predetermined path and at least one thrust element (760, 860), which directly or indirectly exerts a force on said corresponding connection axis (31, 32) so as to induce the displacement along said predetermined path.

9. A motorcycle (1) according to claim 8, wherein said guide element (75, 85) is a rotating element hinged to said frame (12) for rotating about a rotation axis (73, 83), said corresponding connection axis (31, 32) being rotatably connected to said guide element (75, 85) in an eccentric position with respect to said rotation axis (73, 83), said thrust element (760, 860) being connected to said guide element (75, 85) in an eccentric position with respect to said rotation axis (73, 83), which is different from the position in which said corresponding connection axis (31, 32) is connected.

10. A motorcycle (1) according to claim 8 or 9, wherein said thrust element (760, 860) is selected from: an electric actuator, a hydraulic actuator or a pneumatic actuator.

11. A motorcycle (1) according to claim 8 or 9, wherein said thrust element (760, 860) is a spring comprising a first end hinged to the frame (12) and a second end hinged to said guide element (35).

12. A motorcycle (1) according to any one of the claims from 1 to 9, wherein said third connection axis (33) is coaxial with the rotation axis of said connecting rod (22) with respect to said rear wheel and wherein said connecting rod (22).

13. A motorcycle (1) according to any one of the claims from 1 to 11, wherein said third connection axis (33) and said fourth connection axis (34) are connected to said connecting rod (22) at different ends thereof, said motorcycle (1) comprising a brake caliper which is integral with said connecting rod (22) and adapted to act on a brake disk which is integral with said rear wheel (13).

## Patentansprüche

1. Motorrad (1), umfassend:
einen Rahmen (12), der einen Motor (100) trägt;
ein Hinterrad (13), das mit dem Rahmen (12) mittels einer Aufhängung betriebswirksam verbunden ist, die mit dem Rahmen (12) einen vierarmigen kinematischen Mechanismus konfiguriert, wobei der vierarmige kinematische Mechanismus Folgendes umfasst:
eine Schwinge (21), die sich zwischen einer ersten Verbindungsachse (31) an dem Rahmen (12) und/oder dem Motor (100) und einer dritten Verbindungsachse (33) an dem Hinterrad (13) erstreckt;
eine Reaktionsstange (23), die mittels einer zweiten Verbindungsachse (32) an dem Rahmen (12) angelenkt ist;
eine Pleuelstange (22), die eine Radachse trägt, wobei die Pleuelstange (22) mittels einer vierten Verbindungsachse (34) drehbar mit der dritten Verbindungsachse (33) der Schwinge (14) und mit der Reaktionsstange (23) verbunden ist,
wobei ein Mittelpunkt der Momentandrehung (CIR) der Verbindungsstange (22) durch den Schnittpunkt einer ersten geometrischen Linie, die durch die erste Verbindungsachse (31) und die dritte Verbindungsachse (33) verläuft, und durch eine zweite geometrische Linie, die die Verlängerung der Reaktionsstange (23) darstellt, definiert ist,
Einstellmittel (70, 80, 180), die angepasst sind, um die Position von mindestens einer der Verbindungsachsen (31, 32, 33, 34) des vierarmigen kinematischen Mechanismus in Bezug auf die anderen Verbindungsachsen (31, 32, 33, 34) in Rückkopplung auf eine Kompressionsvariation der Aufhängung einzustellen, so dass die Einstellung der zugehörigen Position der Verbindungsachsen die Position des Mittelpunkts der Momentandrehung (CIR) variiert, um so das Gleichgewicht des Motorrads (1) zu variieren, **dadurch gekennzeichnet, dass** die Einstellmittel einen Stellantrieb (76, 86) umfassen, der mit einer Steuereinheit (ECU) des Motorrads verbunden ist, wobei die Steuereinheit (ECU) konfiguriert ist, um ein Eingangssignal der Variation der Kompression der Aufhängung zu empfangen, und der Stellantrieb (76, 86) konfiguriert ist, um die zugehörige Position von mindestens einer der Verbindungsachsen (31, 32, 33, 34) einzustellen, um den Mittelpunkt der Momentandrehung (CIR) zu ändern.

2. Motorrad (1) nach Anspruch 1, wobei die zweite Verbindungsachse (32) eine feste Position in Bezug auf den Rahmen (12) beibehält und wobei Einstellmittel (70) konfiguriert sind, um die Position der ersten Verbindungsachse (31) in Bezug auf die zweite Verbindungsachse (32) zu variieren.

3. Motorrad (1) nach Anspruch 1, wobei die erste Verbindungsachse (31) eine feste Position in Bezug auf den Rahmen (12) beibehält und wobei die Einstellmittel (80) konfiguriert sind, um die Position der zweiten Verbindungsachse (32) in Bezug auf die erste Verbindungsachse (31) zu variieren.

4. Motorrad (1) nach Anspruch 1, **dadurch gekennzeichnet, dass** es erste Einstellmittel (70), die konfiguriert sind, um die Position der ersten Verbindungsachse (31) zu variieren, und zweite Einstellmittel (80), um die Position der zweiten Verbindungsachse (32) zu variieren, umfasst.

5. Motorrad (1) nach einem der Ansprüche 1 bis 4, wobei die Einstellmittel (70, 80) einen Stellantrieb (76, 86) umfassen, der einen feststehenden Teil (76A, 86A), der mit dem Rahmen (12) verbunden ist, und einen beweglichen Teil (76B, 86B), der direkt oder indirekt mit einer entsprechenden Verbindungsachse (31, 32) verbunden ist, umfasst, wobei der feststehende Teil (76A, 86A) und der bewegliche Teil (76B, 86B) so konfiguriert sind, dass sie eine Verschiebung der entsprechenden Verbindungsachse (31, 32) entlang eines vorbestimmten Weges bewirken.

6. Motorrad (1) nach Anspruch 5, wobei der feststehende Teil (76A, 86A) und der bewegliche Teil (76B, 86B) jeweils mit dem Rahmen (12) und mit der entsprechenden Verbindungsachse (31, 32) verbunden sind, um eine Verschiebung desselben entlang eines geradlinigen Weges zu bewirken.

7. Motorrad (1) nach Anspruch 5 oder 6, wobei der Stellantrieb (50) ausgewählt ist aus: einem hydraulischen Stellantrieb, einem elektrischen Stellantrieb, einem pneumatischen Stellantrieb.

8. Motorrad (1) nach einem der Ansprüche 1 bis 6, wobei die Einstellmittel (70, 80) mindestens ein Führungselement (75, 85) zum Führen einer entsprechenden Verbindungsachse (31, 32) entlang eines vorbestimmten Weges und mindestens ein Schubelement (760, 860) umfassen, das direkt oder indirekt eine Kraft auf die entsprechende Verbindungsachse (31, 32) ausübt, um die Verschiebung entlang des vorbestimmten Weges zu induzieren.

9. Motorrad (1) nach Anspruch 8, wobei das Führungselement (75, 85) ein Drehelement ist, das an dem Rahmen (12) angelenkt ist, um sich um eine Drehachse (73, 83) zu drehen, wobei die entsprechende Verbindungsachse (31, 32) drehbar mit dem Führungselement (75, 85) in einer exzentrischen Position in Bezug auf die Drehachse (73, 83) verbunden ist, wobei das Schubelement (760, 860) mit dem Führungselement (75, 85) in einer exzentrischen Position in Bezug auf die Drehachse (73, 83) verbunden ist, die sich von der Position unterscheidet, in der die entsprechende Verbindungsachse (31, 32) verbunden ist.

10. Motorrad (1) nach Anspruch 8 oder 9, wobei das Schubelement (760, 860) ausgewählt ist aus: einem elektrischen Stellantrieb, einem hydraulischen Stellantrieb oder einem pneumatischen Stellantrieb.

11. Motorrad (1) nach Anspruch 8 oder 9, wobei das Schubelement (760, 860) eine Feder ist, die ein erstes Ende, das an dem Rahmen (12) angelenkt ist, und ein zweites Ende, das an dem Führungselement (35) angelenkt ist, umfasst.

12. Motorrad (1) nach einem der Ansprüche 1 bis 9, wobei die dritte Verbindungsachse (33) koaxial mit der Drehachse der Verbindungsstange (22) in Bezug auf das Hinterrad ist und wobei die Verbindungsstange (22).

13. Motorrad (1) nach einem der Ansprüche 1 bis 11, wobei die dritte Verbindungsachse (33) und die vierte Verbindungsachse (34) an verschiedenen Enden davon mit der Verbindungsstange (22) verbunden sind, wobei das Motorrad (1) einen Bremssattel umfasst, der einstückig mit der Verbindungsstange (22) ist und dazu angepasst ist, auf eine Bremsscheibe einzuwirken, die einstückig mit dem Hinterrad (13) ist.

## Revendications

1. Moto (1) comprenant :
un cadre (12) qui supporte un moteur (100) ;
une roue arrière (13) reliée de manière opérationnelle audit cadre (12) au moyen d'une suspension configurant, avec ledit cadre (12), un mécanisme cinématique quadrilatéral, dans lequel ledit mécanisme cinématique quadrilatéral comprend :
un bras oscillant (21) qui s'étend entre un premier axe de connexion (31), au niveau dudit cadre (12) et/ou dudit moteur (100), et un troisième axe de connexion (33) au niveau de ladite roue arrière (13) ;
une tige de réaction (23) articulée sur ledit cadre (12) au moyen d'un deuxième axe de connexion (32) ;
une bielle (22) qui supporte un axe de roue, ladite bielle (22) étant reliée de manière rotative audit troisième axe de connexion (33) dudit bras oscillant (14) et à ladite bielle de réaction (23) au moyen d'un quatrième axe de connexion (34),
dans lequel un centre de rotation instantanée (CIR) de ladite bielle (22) est défini par l'intersection d'une première ligne géométrique passant par ledit premier axe de connexion (31) et ledit troisième axe de connexion (33), et par une seconde ligne géométrique représentant l'extension de ladite tige de réaction (23),
des moyens de réglage (70, 80, 180) adaptés pour régler la position d'au moins un desdits axes de connexion (31, 32, 33, 34) dudit mécanisme cinématique quadrilatéral par rapport aux autres axes de connexion (31, 32, 33, 34), en retour d'une variation de compression de ladite suspension, de telle sorte que ledit réglage de la position liée desdits axes de connexion fasse varier la position dudit centre de rotation instantané (CIR) pour ainsi faire varier l'équilibre de ladite moto (1), **caractérisé en ce que** lesdits moyens de réglage comprennent un actionneur (76, 86) relié à une unité de contrôle (ECU) de ladite moto, ladite unité de contrôle (ECU) étant configurée pour recevoir un signal d'entrée de la variation de compression de ladite suspension, et ledit actionneur (76, 86) étant configuré pour ajuster la position relative d'au moins un desdits axes de connexion (31, 32, 33, 34) pour modifier ledit centre de rotation instantané (CIR).

2. Moto (1) selon la revendication 1, dans laquelle ledit deuxième axe de connexion (32) conserve une position fixe par rapport audit cadre (12) et dans laquelle les moyens de réglage (70) sont configurés pour faire varier la position dudit premier axe de connexion (31) par rapport audit deuxième axe de connexion (32).

3. Moto (1) selon la revendication 1, dans laquelle ledit premier axe de connexion (31) conserve une position fixe par rapport audit cadre (12) et dans laquelle lesdits moyens de réglage (80) sont configurés pour faire varier la position dudit deuxième axe de connexion (32) par rapport audit premier axe de connexion (31).

4. Moto (1) selon la revendication 1, **caractérisée en ce qu'**elle comprend des premiers moyens de réglage (70) configurés pour faire varier la position dudit premier axe de connexion (31) et des seconds moyens de réglage (80) pour faire varier la position dudit deuxième axe de connexion (32).

5. Moto (1) selon l'une quelconque des revendications de 1 à 4, dans laquelle lesdits moyens de réglage (70, 80) comprennent un actionneur (76, 86) comprenant une partie fixe (76A, 86A) reliée audit cadre (12) et une partie mobile (76B, 86B) reliée directement ou indirectement à un axe de connexion correspondant (31, 32), dans lequel ladite partie fixe (76A, 86A) et ladite partie mobile (76B, 86B) sont configurées de manière à provoquer un déplacement dudit axe de connexion correspondant (31, 32) le long d'une trajectoire prédéterminée.

6. Moto (1) selon la revendication 5, dans laquelle ladite partie fixe (76A, 86A) et ladite partie mobile (76B, 86B) sont reliées audit cadre (12) et audit axe de connexion correspondant (31, 32), respectivement, de manière à provoquer leur déplacement le long d'une trajectoire rectiligne.

7. Moto (1) selon la revendication 5 ou 6, dans laquelle ledit actionneur (50) est choisi parmi : un actionneur hydraulique, un actionneur électrique, un actionneur pneumatique.

8. Moto (1) selon l'une quelconque des revendications de 1 à 6, dans laquelle lesdits moyens de réglage (70, 80) comprennent au moins un élément de guidage (75, 85) pour guider un axe de connexion correspondant (31, 32) le long d'une trajectoire prédéterminée et au moins un élément de poussée (760, 860), qui exerce directement ou indirectement une force sur ledit axe de connexion correspondant (31, 32) de manière à induire le déplacement le long de ladite trajectoire prédéterminée.

9. Moto (1) selon la revendication 8, dans laquelle ledit élément de guidage (75, 85) est un élément rotatif articulé sur ledit cadre (12) pour tourner autour d'un axe de rotation (73, 83), ledit axe de connexion correspondant (31, 32) étant relié de manière rotative audit élément de guidage (75, 85) dans une position excentrée par rapport audit axe de rotation (73, 83), ledit élément de poussée (760, 860) étant relié audit élément de guidage (75, 85) dans une position excentrée par rapport audit axe de rotation (73, 83), qui est différente de la position dans laquelle ledit axe de connexion correspondant (31, 32) est relié.

10. Moto (1) selon la revendication 8 ou 9, dans laquelle ledit élément de poussée (760, 860) est choisi parmi : un actionneur électrique, un actionneur hydraulique ou un actionneur pneumatique.

11. Moto (1) selon la revendication 8 ou 9, dans laquelle ledit élément de poussée (760, 860) est un ressort comprenant une première extrémité articulée au cadre (12) et une seconde extrémité articulée audit élément de guidage (35).

12. Moto (1) selon l'une quelconque des revendications de 1 à 9, dans laquelle ledit troisième axe de connexion (33) est coaxial avec l'axe de rotation de ladite bielle (22) par rapport à ladite roue arrière et dans laquelle ladite bielle (22).

13. Moto (1) selon l'une quelconque des revendications de 1 à 11, dans laquelle ledit troisième axe de connexion (33) et ledit quatrième axe de connexion (34) sont reliés à ladite bielle (22) à des extrémités différentes de celle-ci, ladite moto (1) comprenant un étrier de frein solidaire de ladite bielle (22) et adapté pour agir sur un disque de frein solidaire de ladite roue arrière (13).
